(19) Europäisches Patentamt
European Patent Office
Office européen des brevets

(11) **EP 4 589 850 A1**

(12) **EUROPEAN PATENT APPLICATION**

(43) Date of publication:
**23.07.2025 Bulletin 2025/30**

(21) Application number: **24152216.8**

(22) Date of filing: **16.01.2024**

(51) International Patent Classification (IPC):
**H04B 1/04** (2006.01)      **H04L 27/36** (2006.01)
**H04L 27/38** (2006.01)

(52) Cooperative Patent Classification (CPC):
**H04B 1/04; H04L 27/364; H04L 27/3863**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Rohde & Schwarz GmbH & Co. KG
81671 München (DE)**

(72) Inventor: **NAGEL, Joerg
81671 München (DE)**

(74) Representative: **Prinz & Partner mbB
Patent- und Rechtsanwälte
Rundfunkplatz 2
80335 München (DE)**

(54) **METHOD OF SUPPRESSING UNWANTED SIGNAL PORTIONS IN AN IQ SIGNAL**

(57)      A method of suppressing unwanted signal portions in an IQ signal generated by an IQ signal generator system (12) is described. The method comprises the steps of
- generating, by a baseband module (14), a baseband IQ signal, wherein the baseband IQ signal is a multi-tone signal;
- modulating, by a IQ modulator module (16), the baseband IQ signal, thereby obtaining a modulated IQ signal;
- determining, by an analysis module (30), a level function describing a signal level of the modulated IQ signal over time and/or over a phase of the multi-tone signal;

- determining, by the analysis module (30), at least one error quantity based on the level function, wherein the at least one error quantity is indicative of at least one error in the IQ signal generator system; and
- controlling, by a control module (34), the baseband module (14) and/or the IQ modulator module (16) in dependence of the at least one error quantity determined, thereby correcting the at least one error in the IQ signal generator system (12).

Further, an IQ signal generator system (12) is described.

Fig. 1

**Description**

The present invention generally relates to a method of suppressing unwanted signal portions in an IQ signal generated by an IQ signal generator system. The present invention further relates to an IQ signal generator system.

IQ signal generator systems usually comprise a baseband module generating an in-phase (I) signal part and a quadrature (Q) signal part, and a modulation module that generates a modulated IQ signal based on the I signal part and the Q signal part.

In such IQ signal generator systems, it is desirable to suppress sidebands occurring around the carrier frequency. Conventional suppression techniques rely on measurements that are performed by external measurement devices such as a spectrum analyzer. Based on the measurements, correction quantities are determined and the operational parameters of the IQ signal generator system are adapted accordingly.

However, it has turned out that common static suppression techniques do not sufficiently account for frequency-dependent effects that introduce additional errors and thus lead to an incomplete suppression of the sidebands.

Thus, the object of the present invention is to provide a method of suppressing unwanted signal portions in an IQ signal that improves the correction of unwanted signal portions.

According to the present invention, the problem is solved by a method of suppressing unwanted signal portions in an IQ signal generated by an IQ signal generator system. The IQ signal generator system comprises a baseband module, an IQ modulator module, an analysis module, and a control module. The method comprises the steps of

- generating, by the baseband module, a baseband IQ signal having a baseband I signal part and a baseband Q signal part, wherein the baseband IQ signal is a multi-tone signal;

- modulating, by the IQ modulator module, the baseband IQ signal, thereby obtaining a modulated IQ signal;

- determining, by the analysis module, a level function describing a signal level of the modulated IQ signal over time and/or over a phase of the multi-tone signal;

- determining, by the analysis module, at least one error quantity based on the level function, wherein the at least one error quantity is indicative of at least one error in the IQ signal generator system; and

- controlling, by the control module, the baseband module and/or the IQ modulator module in dependence of the at least one error quantity determined, thereby correcting the at least one error in the IQ signal generator system.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

Further, the term "level function" is understood to denote a discrete function or a continuous function that describes a quantity associated with the signal level of the modulated IQ signal. For example, the level function may describe an amplitude of the modulated IQ signal or a power of the modulated IQ signal.

The method according to the present invention is based on the finding that, if the baseband IQ signal is a multi-tone signal, particularly a two-tone signal, the level function described above comprises information on errors occurring in the IQ signal generator system.

More precisely, as will be described in more detail below, the level function comprises information on IQ gain imbalances and IQ quadrature errors if the baseband IQ signal is a multi-tone signal, particularly a two-tone signal.

Accordingly, the at least one error quantity describing the at least one error can be determined based on the determined level function, and the at least one error can be corrected by the control module.

In fact, it has turned out that the method according to the present invention is suitable for correcting frequency-dependent errors, particularly frequency-dependent IQ gain imbalances and/or frequency-dependent IQ quadrature errors.

Further, the method according to the present invention does not need external measurement devices in order to be performed. In fact, the analysis module and the control module may be integrated into the same electronic device comprising the IQ signal generator system. Thus, the effort and costs for suppressing unwanted signal portions, particularly in the sidebands, are reduced.

The method according to the present invention may be performed partially or completely by software of the electronic device comprising the IQ signal generator system. Accordingly, the method according to the present invention may be a computer-implemented method.

According to an aspect of the present invention, the at least one error quantity is indicative of an IQ gain imbalance, and/or of an IQ quadrature error. Thus, the IQ gain imbalance, and/or the IQ quadrature error may be corrected automatically by the control module based on the at least one error quantity determined.

Therein and in the following, the term "IQ gain imbalance" is understood to denote a gain imbalance between a signal path processing the baseband I signal part and a signal path processing the baseband Q signal part. These signal paths may each comprise amplifiers, attenuators, filters, etc., which may influence the gain applied to the baseband I signal part and the baseband Q signal part.

Further, the term "IQ quadrature error" is understood to denote a deviation from orthogonality of an I signal portion and a Q signal portion in the modulated IQ signal. For example, this may occur if the local oscillator signal used for modulation is applied to the baseband I signal part and the baseband Q signal part with a phase difference being different from 90°, i.e. with a phase difference that is not exactly 90°.

In an embodiment of the present invention, the level function is an envelope of the modulated IQ signal. In the context of the present disclosure, the term "envelope" is understood to denote a function, particularly a smooth function, outlining the signal level of the modulated IQ signal. Particularly, the envelope of the modulated IQ signal may be equal to the instantaneous amplitude of the modulated IQ signal.

According to another aspect of the present invention, the analysis module comprises an envelope detector, wherein the level function is determined by the envelope detector. Such envelope detectors usually are provided in IQ signal generator systems anyway. Thus, no further hardware or other measurement equipment is necessary for determining the level function, thereby reducing the effort and costs for suppressing the unwanted signal portions.

In a further embodiment of the present invention, the individual signals of the multi-tone signal are distributed over sidebands of the modulated IQ signal. This allows to purposefully correct unwanted signal portions in the sidebands of the modulated IQ signal.

A further aspect of the present invention provides that the multi-tone signal comprises a first frequency and a second frequency, wherein a summed frequency being a sum of the first frequency and the second frequency is different from zero, and wherein the level function multiplied with a spectral factor is integrated over time in order to determine the at least one error quantity. It has turned out that with this choice of the first frequency and the second frequency, the level function varies over time if an error is present in the IQ signal generator system, while the level function is constant if no error is present in the IQ signal generator system. By integrating over the level function multiplied by the spectral factor, a measure for the at least one error is obtained, namely the at least one error quantity.

In general, the first frequency and the second frequency have different signs, i.e. if the first frequency is positive then the second frequency is negative and vice versa.

Particularly, the spectral factor depends on the summed frequency. In fact, the spectral factor may be $\sin(2\pi \cdot Fd \cdot t)$ or $\cos(2\pi \cdot Fd \cdot t)$, wherein Fd is the absolute value of the summed frequency and t is time.

In an embodiment of the present invention, the level function multiplied with the spectral factor is integrated over a predetermined period or a multiple of the predetermined period, wherein the predetermined period is the inverse of the summed frequency, particularly wherein the spectral factor is integrated over an integer multiple of the predetermined period. While integrating over one predetermined period is enough in order to determine the at least one error quantity, uncorrelated distortions in the level function can be suppressed by integrating over a multiple of the predetermined period, particularly over an integer multiple of the predetermined period.

According to an aspect of the present invention, the at least one error quantity is determined for a set of first frequencies and second frequencies, respectively. Accordingly, the first frequency and/or the second frequency may be varied over a relevant frequency range, such that the at least one error quantity is determined for the whole relevant spectrum, namely for the whole relevant baseband spectrum. This allows for a particularly precise suppression of the unwanted signal portions over the whole relevant spectrum, particularly over the sidebands of the modulated IQ signal.

For example, a frequency sweep may be applied to the first frequency and/or to the second frequency.

In a further embodiment of the present invention, the multi-tone signal comprises a first frequency and a second frequency, wherein a summed frequency being a sum of the first frequency and the second frequency is equal to zero, and wherein the level function is determined by varying a phase between the individual tones of the baseband IQ signal. It has turned out that with this choice of the first frequency and the second frequency, the level function varies over the relative phase of the first tone having the first frequency and the second tone having the second frequency if an error is present in the IQ signal generator system, while the level function is constant if no error is present in the IQ signal generator system. Thus, the at least one error quantity can be determined based on the variation of the level function over the relative phase.

The individual tones of the baseband IQ signal may be generated by different signal generator units. In fact, each signal generator unit may generate a signal having a real signal portion and an imaginary signal portion. The real signal portions may be summed, thereby obtaining the baseband I signal part. Further, the imaginary signal portions may be summed, thereby obtaining the baseband Q signal part.

Another aspect of the present invention provides that a gain applied to the baseband I signal part and/or a gain applied to the baseband Q signal part are/is adjusted in order to correct the at least one error. This way, an IQ gain imbalance between the baseband I signal part and the baseband Q signal part can be corrected.

In an embodiment of the present invention, an adapted baseband I signal part is determined, wherein the adapted baseband I signal part is a linear combination of the baseband I signal part and the baseband Q signal part. Alternatively or additionally, an adapted baseband Q signal part is determined, wherein the adapted baseband Q signal part is a linear combination of the baseband I signal part and the baseband Q signal part. This way, an IQ quadrature error can be corrected. In other words, the IQ quadrature error is corrected by a predistortion of the baseband I signal part and/or of the baseband Q signal part.

In fact, the baseband module may comprise a suitable filter that is configured to determine the adapted baseband I signal part and/or the adapted Q signal part.

According to another aspect of the present invention, a phase difference between a local oscillator signal being applied to the I signal part and the local oscillator signal being applied to the Q signal part is adapted in order to correct the at least one error. More precisely, the phase of the local oscillator signal applied to the baseband I signal part and/or to the baseband Q signal part may be adapted such that the phase difference is exactly 90°. This way, an IQ quadrature error can be corrected.

According to the invention, the problem further is solved by an IQ signal generator system. The IQ signal generator system comprises a baseband module, an IQ modulator module, an analysis module, and a control module. The IQ signal generator system is configured to perform the method described above.

Particularly, the IQ signal generator system is configured to perform the method according to any one of the variants described above.

Regarding the advantages and further properties of the IQ signal generator system, reference is made to the explanations given above with respect to the method, which also hold for the IQ signal generator system and vice versa.

The foregoing aspects and many of the attendant advantages of the claimed subject matter will become more readily appreciated as the same become better understood by reference to the following detailed description, when taken in conjunction with the accompanying drawings, wherein:

- Figure 1 schematically shows an electronic device with an IQ signal generator system according to the present invention;
- Figure 2 shows a flow chart of a method of suppressing unwanted signal portions in an IQ signal according to the present invention;
- Figure 3 shows plots of a modulated IQ signal without errors in the IQ signal generator system;
- Figure 4 shows plots of the modulated IQ signal with IQ imbalances being present; and
- Figure 5 shows plots of the modulated IQ signal with quadrature errors being present.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

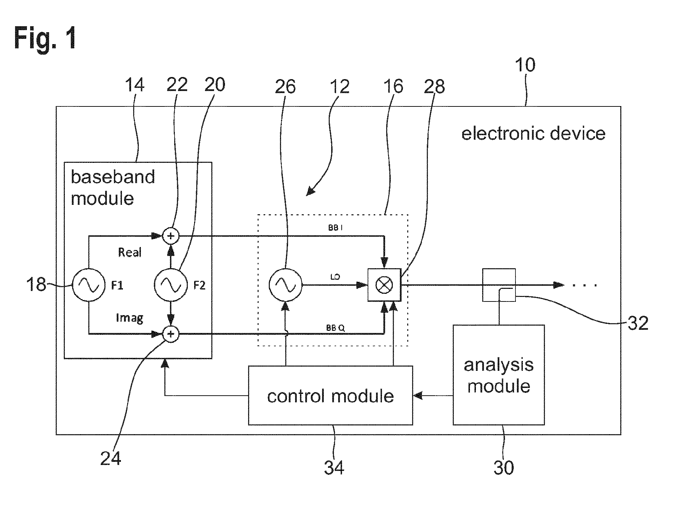

Figure 1 schematically shows an electronic device 10 comprising an IQ signal generator system 12.

For example, the electronic device 10 may be a signal generator being configured to generate a test signal for testing a device under test.

As another example, the electronic device 10 may be a test and/or measurement instrument for testing mobile network devices, broadcasting devices, RF transmitters, RF receivers, or other wireless communication devices.

As a further example, the electronic device 10 may be an RF transmitter, a wireless communication device, particularly a WLAN device, a TV transmitter, etc.

However, it is to be understood that the electronic device 10 may be any other type of device with built-in IQ signal generator.

The IQ signal generator system 12 comprises a baseband module 14 and an IQ modulator module 16.

In general, the baseband module 14 is configured to generate a baseband IQ signal having a baseband I signal part ("BB I" in Figure 1) and a baseband Q signal part ("BB Q" in Figure 1).

In fact, the baseband module 14 comprises a first signal generator unit 18, and a second signal generator unit 20.

The first signal generator unit 18 is configured to generate a first single-tone signal having a frequency F1.

The second signal generator unit 20 is configured to generate a second single-tone signal having a frequency F2.

Therein, amplitudes of the first single-tone signal and of the second single-tone signal may be equal to each other or different from each other.

The baseband module 14 further comprises a first adder unit 22 that is configured to receive and superpose real parts of the single-tone signals generated by the signal generator units 18, 20, thereby obtaining the baseband I signal part.

Moreover, a second adder unit 24 is provided that is configured to receive and superpose imaginary parts of the single-tone signals generated by the signal generator units 18, 20, thereby obtaining the baseband Q signal part.

Accordingly, the baseband IQ signal is a multi-tone signal. In fact, in the exemplary embodiment shown in Figure 1, the baseband IQ signal is a two-tone signal.

It is noted that it is also conceivable that further signal generator units may be provided in the baseband module 14.

The IQ modulator module 16 comprises a local oscillator 26 that is configured to generate a local oscillator (LO) signal having a certain frequency and phase, wherein the frequency and phase of the LO signal may be tunable.

The IQ modulator module 16 further comprises a mixer module 28 that is configured to receive the baseband I signal part, the baseband Q signal part, and the LO signal, and to generate a modulated IQ signal based on the LO signal and the baseband signal parts.

Therein, the baseband module 14 and the IQ modulator module 16 may be configured such that a travel time of the baseband I signal part to the mixer module 28 is equal to a travel time of the baseband Q signal part to the mixer module 28.

The modulated IQ signal may be provided to further components of the electronic device 10, as is indicated by the dots in Figure 1.

For example, the further components may comprise an RF frontend that is configured to up-convert the modulated IQ signal to an RF signal.

The electronic device 10 further comprises an analysis module 30 that is provided downstream of the IQ modulator module 16.

In the exemplary embodiment shown in Figure 1, the analysis module 30 is connected to the mixer module 28 by a directional coupler 32, such that the modulated IQ signal is forwarded to the analysis module 30 via the directional coupler 32.

However, it is to be understood that the analysis module 30 may be connected to the mixer module 28 by means of any other suitable type of connection.

The electronic device 10 further comprises a control module 34 that is connected to the analysis module 30 downstream of the analysis module 30.

The control module 34 is further connected to the baseband module 14, the local oscillator 26, and/or to the mixer module 28.

In fact, the control module 34 may be synchronized with the baseband module 14 and/or with the IQ modulator module 16, particularly with the local oscillator 26.

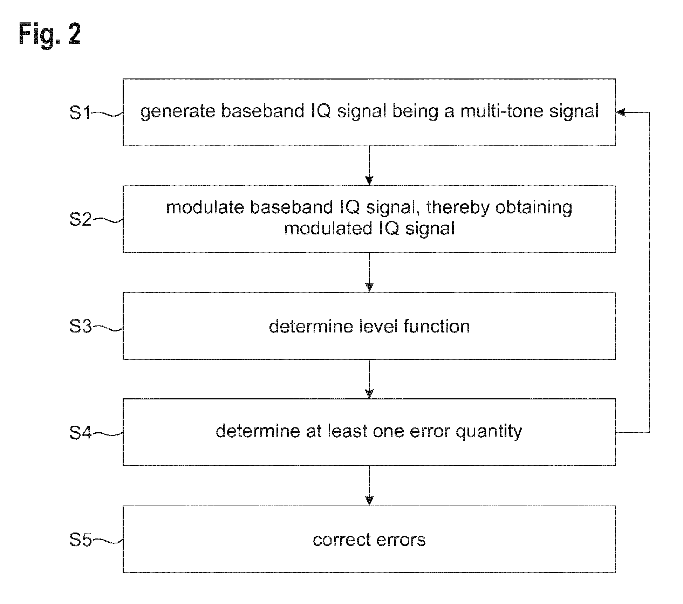

The electronic device 10 or rather the IQ signal generator system 12 is configured to perform a method of suppressing unwanted signal portions in the modulated IQ signal that is described hereinafter with reference to Figure 2 showing a schematic flow chart of the method.

The baseband IQ signal being a multi-tone signal described above is generated by the baseband module 14 (step S1).

Without restriction of generality, the case of the baseband IQ signal being a two-tone signal is described hereinafter.

Accordingly, the baseband IQ signal comprises a first tone having a frequency F1, and a second tone having a frequency F2.

Therein, the frequencies F1, F2 may be chosen such that the following criteria are fulfilled.

A summed frequency Fd being equal to an absolute value of a sum of the frequencies F1 and F2 is smaller than a predetermined threshold.

For example, the analysis module 30 may comprise an envelope detector having a certain bandwidth. In this case, the predetermined threshold may be equal to the bandwidth of the envelope detector.

The absolute values of the individual frequencies may be greater than the predetermined threshold, particularly greater than the bandwidth of the envelope detector.

Accordingly, one of the frequencies F1 and F2 may be positive, while the other one of the frequencies F1 and F2 may be negative.

Moreover, the absolute values of the frequencies F1 and F2 are different from each other, such that the summed frequency Fd described above is different from 0.

The baseband IQ signal is modulated by means of the IQ modulator module 16, thereby obtaining the modulated IQ signal (step S2).

Choosing the frequencies F1, F2 based on the criteria described above, it is ensured that the individual signals of the two-tone signal are distributed over sidebands of the modulated IQ signal.

The modulated IQ signal is forwarded to the analysis module 30, particularly via the directional coupler 32.

A level function describing a signal level of the modulated IQ signal over time is determined by the analysis module 30 (step S3).

In general, the level function may be a discrete function or a continuous function describing the signal level, particularly the amplitude and/or the power of the modulated IQ signal over time.

Particularly, the level function may be an envelope of the amplitude or power of the modulated IQ signal plotted against time.

In fact, the analysis module 30 may comprise an envelope detector that is configured to determine the envelope of the modulated IQ signal.

At least one error quantity is determined based on the determined level function, wherein the at least one error quantity is indicative of at least one error in the IQ signal generator system 12 (step S4).

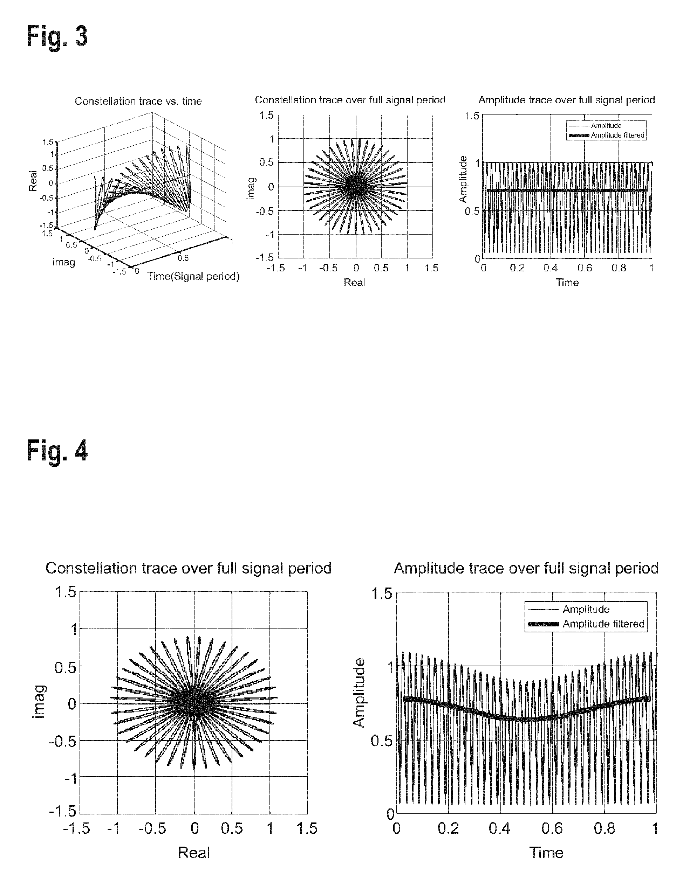

As is illustrated in Figures 3 to 5, the type and severity of the at least one error can be determined based on the determined level function.

The left diagram in Figure 3 shows a constellation trace of the modulated IQ signal corresponding to the two-tone baseband IQ signal described above over time for the case of no error being present in the IQ signal generator system 12.

The middle diagram in Figure 3 shows the constellation trace over one full period T=1/Fd of the modulated IQ signal projected onto the I-Q-plane. As can be seen, the projected constellation trace is substantially circular if no error is present.

The right diagram in Figure 3 shows an amplitude of modulated IQ signal plotted against time, as well as the determined level function ("Amplitude filtered" in Figure 3) plotted against time.

As can be seen, the determined level function is constant if no errors are present.

Figure 4 shows the projected constellation trace as well as the level function for the case of an IQ gain imbalance being present. Due to the IQ gain imbalance, the projected constellation trace deviates from the circular form and is deformed elliptically. Further, the level function is not constant but varies over time.

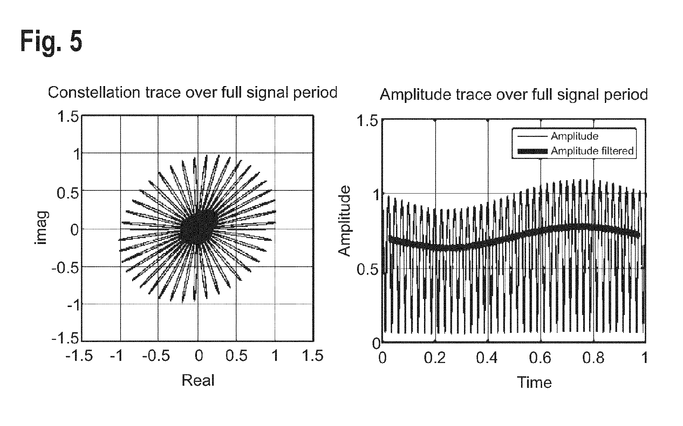

Figure 5 shows the projected constellation trace as well as the level function for the case of an IQ quadrature error being present. Due to the IQ quadrature error, the projected constellation trace deviates from the circular form and is deformed elliptically. Further, the level function is not constant but varies over time.

In a linear approximation, the IQ gain imbalance and the IQ quadrature error are described by or rather proportional to the error quantities $E_{IQ,g}$ and $E_{IQ,quad}$, respectively, which are given by

$$E_{IQ,g} = \int_0^{n \cdot T} A(t) \cos(2\pi \cdot Fd \cdot t) \, dt \,,$$

$$E_{IQ,quad} = \int_0^{n \cdot T} A(t) \sin(2\pi \cdot Fd \cdot t) \, dt \,.$$

Therein, $n$ is a number equal to or greater than 1, $A(t)$ is the determined level function, and $T = 1/Fd = 1/(|F1 + F2|)$ is the period of the modulated IQ signal.

Particularly, $n$ is an integer equal to or greater than 1.

It is noted that these error quantities can be interpreted to be the real and imaginary parts of the first coefficient of a Fourier series of the level function $A(t)$, which is periodic with period $T$.

The steps described above may be repeated for a set of different first frequencies F1 and second frequencies F2, i.e. the at least one error quantity may be determined for a set of different pairs (F1,F2), particularly wherein the different pairs each fulfill the criteria described above.

Accordingly, the first frequency F1, the second frequency F2 and/or the summed frequency Fd = |F1+F2| may be varied, for example by applying a frequency sweep to the first frequency and/or to the second frequency.

In each iteration, the at least one error quantity is determined for baseband frequencies near F1, F2. Accordingly, by varying the first frequency F1, the second frequency F2 and/or the summed frequency Fd, the at least one error quantity can be determined for the whole relevant baseband frequency spectrum, and the corresponding errors can be corrected as described hereinafter.

The at least one determined error quantity or rather the determined error quantities is/are forwarded to the control module 34.

The baseband module 14 and/or the IQ modulator module 16 are controlled by the control module 34 in dependence of the at least one error quantity determined, such that the at least one error corresponding to the at least one error quantity is corrected (step S5).

For example, if the at least one error comprises an IQ gain imbalance, a gain applied to the baseband I signal part and/or a gain applied to the baseband Q signal part may be adjusted in order to correct at least one error.

More precisely, at least one attenuator, at least one amplifier, and/or at least one filter comprised in the baseband module 14 and/or in the IQ modulator module 16 may be controlled to adjust the gain applied to the baseband I signal part and/or to the baseband Q signal part.

As another example, if the at least one error comprises an IQ quadrature error, the baseband I signal part and/or the baseband Q signal part may be adapted by an appropriate filter, particularly by a filter of the baseband module 14.

In fact, the filter may determine an adapted baseband I signal part $I'$, which corresponds to a linear combination of the baseband I signal part and the baseband Q signal part, i.e. $I' = a_1 I + b_1 Q$.

Further, the filter may determine an adapted baseband Q signal part $Q'$, which corresponds to a linear combination of the baseband I signal part and the baseband Q signal part, i.e. $Q' = a_2 I + b_2 Q$.

Therein, the filter coefficients $a_i$, $b_i$ are determined such that the IQ quadrature error is compensated.

Alternatively or additionally, the phases of the LO signal applied to the baseband I signal part and/or to the baseband Q signal part by the mixer module 28 may be adapted such that the phase difference is exactly 90°.

The correction described above may be performed iteratively, such that the (absolute) value of the at least one error quantity decreases with each iteration. Alternatively, a single correction step may be applied.

For the steps of the method described above, it has been assumed that the summed frequency Fd is different from 0.

However, the method can likewise be applied for the summed frequency Fd being equal to 0, i.e. for F1 = -F2. The necessary modifications compared to the method described above are described hereinafter.

In step S1, the first tone is generated with frequency F1, and the second tone is generated with frequency F2 = -F1.

The other criteria described above, i.e. apart from $Fd \neq 0$, likewise apply.

In step S3, a level function describing a signal level of the modulated IQ signal over a relative phase of the first tone and the second tone is determined.

For this purpose, the first tone and the second tone are consecutively generated with different relative phases, and a corresponding sample of the level function is determined for each relative phase.

For example, the relative phase may be varied between 0 and $2\pi$.

The at least one error quantity can then be determined based on the determined level function, and the at least one error corresponding to the at least one determined error quantity can be corrected.

In a specific example, the at least one error quantity can be determined as follows.

The first tone and the second tone are generated with a phase difference of $\varphi(n)$, wherein the phase difference $\varphi(n)$ is varied between N different values according to $\varphi(n) = 2\pi(n - 1)/N$ with $n = 1, \dots, N$.

The first tone is proportional to $exp(2\pi i \cdot F1 \cdot t)$, while the second tone is proportional to $exp(-i(2\pi - F1 \cdot t + \varphi(n)))$.

The IQ gain imbalance and the IQ quadrature error are then described by or rather proportional to the error quantities $E_{IQ,g}$ and $E_{IQ,quad}$, respectively, which are given by

$$E_{IQ,g} = \sum_{n=1}^{N} A(n)\cos(\varphi(n))$$

$$E_{IQ,quad} = \sum_{n=1}^{N} A(n)\sin(\varphi(n)).$$

Therein, $A(n)$ is the determined level function, wherein $A(n)$ is used as an abbreviation for $A(\varphi(n))$.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

**Claims**

1. A method of suppressing unwanted signal portions in an IQ signal generated by an IQ signal generator system (12), the IQ signal generator system (12) comprising a baseband module (14), an IQ modulator module (16), an analysis module (30), and a control module (34), wherein the method comprises the steps of

   - generating, by the baseband module (14), a baseband IQ signal having a baseband I signal part and a baseband Q signal part, wherein the baseband IQ signal is a multi-tone signal;
   - modulating, by the IQ modulator module (16), the baseband IQ signal, thereby obtaining a modulated IQ signal;
   - determining, by the analysis module (30), a level function describing a signal level of the modulated IQ signal over time and/or over a phase of the multi-tone signal;
   - determining, by the analysis module (30), at least one error quantity based on the level function, wherein the at least one error quantity is indicative of at least one error in the IQ signal generator system (12); and

- controlling, by the control module (34), the baseband module (14) and/or the IQ modulator module (16) in dependence of the at least one error quantity determined, thereby correcting the at least one error in the IQ signal generator system (12).

2. The method according to any one of the preceding claims, wherein the at least one error quantity is indicative of an IQ gain imbalance, and/or of an IQ quadrature error.

3. The method according to any one of the preceding claims, wherein the level function is an envelope of the modulated IQ signal.

4. The method according to any one of the preceding claims, wherein the analysis module (30) comprises an envelope detector, and wherein the level function is determined by the envelope detector.

5. The method according to any one of the preceding claims, wherein the individual signals of the multitone signal are distributed over sidebands of the modulated IQ signal.

6. The method according to any one of the preceding claims, wherein the multi-tone signal comprises a first frequency and a second frequency, wherein a summed frequency being a sum of the first frequency and the second frequency is different from zero, and wherein the level function multiplied with a spectral factor is integrated over time in order to determine the at least one error quantity.

7. The method of claim 6, wherein the spectral factor depends on the summed frequency.

8. The method of claim 6 or 7, wherein the level function multiplied with the spectral factor is integrated over a predetermined period or a multiple of the predetermined period, wherein the predetermined period is the inverse of the summed frequency, particularly wherein the spectral factor is integrated over an integer multiple of the predetermined period.

9. The method according to any one of claims 6 to 8, wherein the at least one error quantity is determined for a set of first frequencies and second frequencies, respectively.

10. The method according to any one of claims 1 to 5, wherein the multi-tone signal comprises a first frequency and a second frequency, wherein a summed frequency being a sum of the first frequency and the second frequency is equal to zero, and wherein the level function is determined by varying a phase between the individual tones of the baseband IQ signal.

11. The method according to any one of the preceding claims, wherein the individual tones of the baseband IQ signal are generated by different signal generator units (18, 20).

12. The method according to any one of the preceding claims, wherein a gain applied to the baseband I signal part and/or a gain applied to the baseband Q signal part are/is adjusted in order to correct the at least one error.

13. The method according to any one of the preceding claims, wherein an adapted baseband I signal part is determined, wherein the adapted baseband I signal part is a linear combination of the baseband I signal part and the baseband Q signal part, and/or wherein an adapted baseband Q signal part is determined, wherein the adapted baseband Q signal part is a linear combination of the baseband I signal part and the baseband Q signal part.

14. The method according to any one of the preceding claims, wherein a phase difference between a local oscillator signal being applied to the I signal part and the local oscillator signal being applied to the Q signal part is adapted in order to correct the at least one error.

15. An IQ signal generator system, the IQ signal generator system (12) comprising a baseband module (14), an IQ modulator module (16), an analysis module (30), and a control module (34), wherein the IQ signal generator system (12) is configured to perform the method according to any one of the preceding claims.

# Fig. 1

# Fig. 2

S1 — | generate baseband IQ signal being a multi-tone signal |

S2 — | modulate baseband IQ signal, thereby obtaining modulated IQ signal |

S3 — | determine level function |

S4 — | determine at least one error quantity |

S5 — | correct errors |

# Fig. 3

Constellation trace vs. time

Constellation trace over full signal period

Amplitude trace over full signal period

# Fig. 4

Constellation trace over full signal period

Amplitude trace over full signal period

# Fig. 5

Constellation trace over full signal period

Amplitude trace over full signal period

**EUROPEAN SEARCH REPORT**

Europäisches
Patentamt
European
Patent Office
Office européen
des brevets

**Application Number**

EP 24 15 2216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 503 588 A2 (NIPPON TELEGRAPH & TELEPHONE [JP]) 16 September 1992 (1992-09-16) * the whole document * | 1-15 | INV. H04B1/04 H04L27/36 H04L27/38 |
| X | US 2008/063113 A1 (GAO WEI [US] ET AL) 13 March 2008 (2008-03-13) * paragraph [0035] - paragraph [0068]; figures 2,3 * * paragraph [0120] - paragraph [0132]; figure 8 * | 1-15 | |
| X | WO 2017/109235 A1 (CENTRO DE ESTUDIOS E INVESTIG TECN [ES] ET AL.) 29 June 2017 (2017-06-29) * the whole document * | 1-15 | |

**TECHNICAL FIELDS SEARCHED (IPC)**

H04B
H04L

The present search report has been drawn up for all claims

| Place of search | Date of completion of the search | Examiner |
|---|---|---|
| Munich | 7 June 2024 | Ayala Perriello, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2216

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2024

| Patent document cited in search report | | Publication date | Patent family member(s) | | Publication date |
|---|---|---|---|---|---|
| EP 0503588 | A2 | 16-09-1992 | DE | 69222452 T2 | 26-02-1998 |
| | | | EP | 0503588 A2 | 16-09-1992 |
| | | | US | 5293406 A | 08-03-1994 |
| US 2008063113 | A1 | 13-03-2008 | CN | 101119357 A | 06-02-2008 |
| | | | TW | 200814656 A | 16-03-2008 |
| | | | US | 2008063113 A1 | 13-03-2008 |
| WO 2017109235 | A1 | 29-06-2017 | NONE | | |

EPO FORM P0459

For more details about this annex : see Official Journal of the European Patent Office, No. 12/82